(19) Europäisches Patentamt / European Patent Office / Office européen des brevets

(11) **EP 4 152 511 A1**

(12) **EUROPEAN PATENT APPLICATION**
published in accordance with Art. 153(4) EPC

(43) Date of publication:
**22.03.2023 Bulletin 2023/12**

(21) Application number: **21900872.9**

(22) Date of filing: **17.11.2021**

(51) International Patent Classification (IPC):
*H01M 50/507* (2021.01)     *H01M 50/503* (2021.01)
*H01M 50/526* (2021.01)     *H01M 50/512* (2021.01)
*H01M 50/522* (2021.01)     *H01B 13/00* (2006.01)
*H01R 43/00* (2006.01)

(52) Cooperative Patent Classification (CPC):
**H01B 13/00; H01M 50/503; H01M 50/507;
H01M 50/512; H01M 50/522; H01M 50/526;
H01R 43/00;** Y02E 60/10

(86) International application number:
**PCT/KR2021/016877**

(87) International publication number:
**WO 2022/119184 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.12.2020 KR 20200168885**

(71) Applicant: **LG Energy Solution, Ltd.
Seoul 07335 (KR)**

(72) Inventors:
• **LEE, Young Jun
  Daejeon 34122 (KR)**
• **HWANG, Sung Tack
  Daejeon 34122 (KR)**

(74) Representative: **Hoffmann Eitle
Patent- und Rechtsanwälte PartmbB
Arabellastraße 30
81925 München (DE)**

(54) **MULTILAYER BRANCHED BUSBAR AND MANUFACTURING METHOD THEREFOR**

(57)     The present invention relates to a multilayer divergence type busbar that is easy to manufacture and has various shapes and a method of manufacturing the same. The divergence type busbar is configured such that at least two conductive layers are stacked and some of the conductive layers are divided and diverged at a divergence point.

【FIG. 2】

## Description

[Technical Field]

This application claims the benefit of priority to Korean Patent Application No. 2020-0168885 filed on December 4, 2020, the disclosure of which is incorporated herein by reference in its entirety.

The present invention relates to a multilayer divergence type busbar and a method of manufacturing the same, and more particularly to a multilayer divergence type busbar configured such that a busbar having a plurality of stacked layers is diverged to connect devices or batteries to each other in parallel and a method of manufacturing the same.

[Background Art]

With recent development of alternative energies due to air pollution and energy depletion caused as the result of use of fossil fuels, demand for secondary batteries capable of storing electrical energy that is produced has increased. The secondary batteries, which are capable of being charged and discharged, are intimately used in daily life. For example, the secondary batteries are used in mobile devices, electric vehicles, and hybrid electric vehicles.

The secondary batteries used as energy sources of various kinds of electronic devices inevitably used in modern society are mounted in a variety of devices, such as mobile devices and electric vehicles. Variously shaped battery cells satisfying demand of users and diversity in shape of devices in which the battery cells are mounted are required.

A secondary battery used in a small-sized device includes several battery cells, whereas a battery module or a battery pack including a plurality of battery cells electrically connected to each other is used in a vehicle. In the battery module or the battery pack, the plurality of battery cells is connected to each other in series and in parallel in order to increase capacity and output thereof. In general, the battery module or the battery pack includes a busbar module configured to electrically connect a plurality of secondary batteries, i.e. battery cells, to each other when the battery cells are stacked. The busbar module includes a busbar configured to connect electrode leads connected to the battery cells to each other or to connect the battery cells to each other.

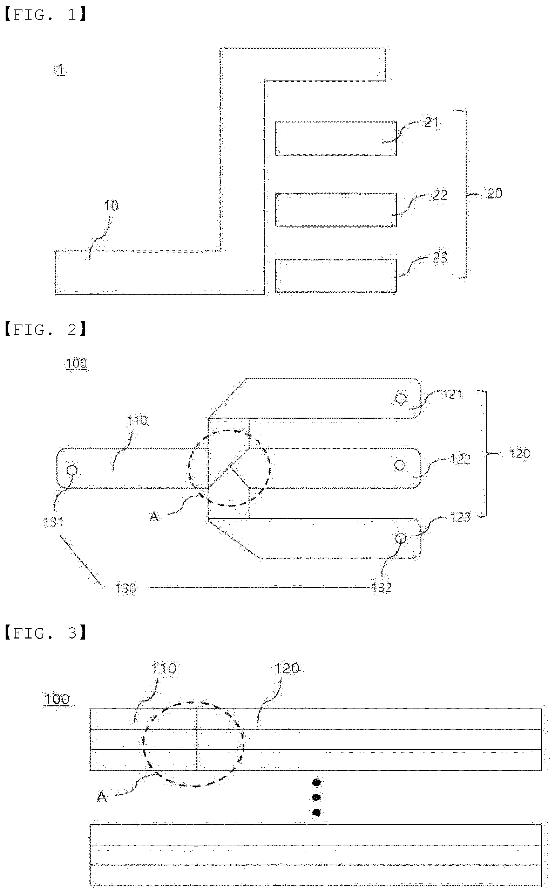

FIG. 1 is a top view of a conventional busbar for parallel connection. As shown in FIG. 1, the conventional busbar 1 for parallel connection may include a stem portion 10 connected to an energy supply portion configured to supply energy to the busbar 1 for parallel connection and a branch portion 20 connected to the stem portion 10 to connect devices or batteries electrically connected to the busbar 1 for parallel connection in parallel.

In the conventional busbar 1 for parallel connection, a portion constituting the stem portion 10 and a first branch portion 21, a second branch portion 22, and a third branch portion 23 constituting the branch portion 20 are separately formed and are then connected to each other in order to form a shape in which the busbar is divided into several branches.

However, the stem portion 10 and the branch portion 20 must be formed based on various shapes of the busbar 1 for parallel connection to be used, and the construction for connecting the stem portion 10 and the branch portion 20 to each other is necessary. Furthermore, there is a concern of connection at a connection portion becoming loose or being damaged.

Patent Document 1 mentions a busbar having a diverged shape, but has a problem in that a busbar must be individually formed depending on a desired shape of the busbar.

Therefore, there is a need for the construction of a busbar that is easy to deform into a desired shape and is easy to produce.

(Prior Art Document)

(Patent Document 1) Japanese Patent Application Publication No. 2010-207059 (2010.09.16)

[Disclosure]

[Technical Problem]

The present invention has been made in view of the above problems, and it is an object of the present invention to provide a busbar for parallel connection that is easily deformed so as to have various shapes and reduces damage to a connection portion.

[Technical Solution]

A busbar according to the present invention to accomplish the above object is a divergence type busbar comprising at least two conductive layers stacked, some of the conductive layers being divided and diverged from one another at a divergence point.

The divergence point may be a parallel connection section at which members electrically connected to each other by the diverged conductive layers are connected to each other so as to have an identical voltage.

The number of the conductive layers diverged at from one another the parallel connection section may be set based on a current specification of each diverged portion.

The number of the diverged conductive layers may be calculated by an equation below.

$$
\text{Number of conductive layers} = \text{current specification of each diverged conductive layer} \ / \ \text{sum of current specifications of all conductive layers}
$$

Opposite ends of the diverged conductive layers may have an identical length.

Holes may be formed in opposite ends of the diverged conductive layers after welding.

Some of the conductive layers may be folded and diverged from one another.

Each conductive layer may be made of a flexible material.

Each conductive layer may be made of at least one of copper, a copper alloy, nickel, a nickel alloy, and aluminum.

The present invention provides a battery module including the divergence type busbar.

The present invention provides a battery pack including the divergence type busbar.

The present invention provides a method of manufacturing a divergence type busbar, the method including (S1) stacking at least two conductive layers, (S2) welding one end of each of the conductive layers and forming a hole, (S3) folding some of the conductive layers to form at least one divergence path, and (S4) welding one end of each of the divergence paths and forming a hole.

The method may further include (S4-0) cutting the other end of each of the divergence paths so as to satisfy design conditions after repeating step (S3) at least once.

In addition, the present invention may provide all possible combinations of the above solving means.

[Advantageous Effects]

As is apparent from the above description, a busbar according to the present invention is easy to deform into various shapes and has a multilayer structure, wherein only one busbar is manufactured and folded, whereby a manufacturing process thereof is simple.

In addition, the number of layers is divided based on desired current specifications, whereby it is possible to easily adjust current specifications.

Furthermore, one busbar is folded and diverged, whereby a concern of loose connection when the busbar is connected is reduced.

[Description of Drawings]

FIG. 1 is a top view of a conventional busbar for parallel connection.
FIG. 2 is a top view of a divergence type busbar according to the present invention.
FIG. 3 is a side view of the divergence type busbar according to the present invention.
FIG. 4 is a top view of the divergence type busbar according to the present invention before divergence.
FIG. 5 is a top view of the divergence type busbar according to the present invention after first divergence.
FIG. 6 is a top view of the divergence type busbar according to the present invention after second divergence.
FIG. 7 is a top view of a divergence type busbar according to another embodiment of the present invention.

[Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

FIG. 2 is a top view of a divergence type busbar according to the present invention, and FIG. 3 is a side view of the divergence type busbar according to the present invention.

The divergence type busbar 100 according to the present invention includes a stem portion 110 connected to an energy supply portion configured to supply main energy to the divergence type busbar 100 and a branch portion 120 protruding from the stem portion 110, the branch portion being configured to transmit energy supplied from the energy supply portion in parallel.

As shown in FIG. 3, the divergence type busbar 100 according to the present invention is configured such that two or more conductive layers are stacked.

The conductive layer may be made of a conductive material. As an example, the conductive layer may be made of at least one of copper, a copper alloy, nickel, a nickel alloy, and aluminum. Specifically, the copper alloy may include 60 or more weight% of copper. More specifically, the copper alloy may include 90 or more weight% of copper. In addition, the copper alloy may include the remaining weight% of at least one selected from the group consisting of nickel, silicon, tin, iron, zinc, magnesium, phosphorus, chromium, and zirconium, in addition to the specified weight% of copper. For example, the copper alloy may include 90 or more weight% of copper, less than 10 weight% of zinc, less than 10 weight% of chromium, and less than 5 weight% of zirconium. Also, in another embodiment, the copper alloy may include 90 or more weight% of copper, less than 5 weight% of nickel, less than 1 weight% of silicon, less than 1 weight% of tin, 1 or less weight% of iron, 1 or less weight% of zinc, 0.1 or less weight% of magnesium, 0.1 or less weight% of phosphorus, and 0.1 or less weight% of zirconium. However, the divergence type busbar 100 is not limited to the copper alloy. All metal alloys including nickel, aluminum, gold, and silver as main ingredients are applicable, and all materials having high electrical conductivity, such as conductive rubber, a gold-silver nanocomposite manufactured by mixing silver nanowires, the surfaces of which are wrapped with gold, with poly(styrene-butadienestyrene) (SBS), and carbon nanotubes, and a carbon-rubber composite, may be used.

The conductive layer may be made of a flexible material. Since the conductive layer is made of a flexible material, the divergence type busbar 100 according to the present invention is not damaged even though some layers are folded. As an example, the conductive layer may be made of a metal having a thickness of 0.2 mm to 0.25 mm based on copper (C1100, 1/4H). If the conductive layer is too thin, the conductive layer may be damaged when a portion of the conductive layer is diverged. If the conductive layer is too thick, it is not possible to diverge the conductive layer into a desired shape, and therefore it is not possible to form variously shaped busbars.

In addition, the conductive layer may have a tensile elongation of 10% to 25% and a strength of 215 $N/mm^2$ to 275 $N/mm^2$. If the tensile elongation of the conductive layer is less than 10%, it may be difficult to diverge the conductive layer. If the tensile elongation of the conductive layer is greater than 25%, the busbar constituted by the conductive layer may not be fixed in a desire shape. Also, if the strength of the conductive layer is less than 215 $N/mm^2$, the conductive layer may be damaged when the conductive layer is diverged. If the strength of the conductive layer is greater than 275 $N/mm^2$, it may be difficult to diverge the conductive layer. As an example, the conductive layer may be made of a metal, such as copper, a copper alloy, or aluminum.

The conductive layer is folded at a divergence point A to form a branch portion 120, as shown in FIG. 2. The branch portion 120 may have a shape shown in FIG. 2 in which the branch portion is divided into two branches from the same divergence point A, or may have a branch shape in which the branch portion is divided into branches from different divergence points A.

The divergence point A may be a parallel connection section at which members electrically connected to each other by the diverged conductive layers are connected to each other so as to have the same voltage. The branch portions 120 divided by the divergence point A may be formed so as to have desired current specification in order to supply specific power to desired portions.

To this end, the respective conductive layers may be formed so as to have the same thickness, and the number of the conductive layers forming the diverged portions, i.e. the branch portions 120, may be set based on current specification.

As an example, the number of the conductive layers that are diverged may be calculated by the following equation.

Number of conductive layers = current specification of each diverged conductive layer / sum of current specifications of all conductive layers

On the assumption that current specification of the all conductive layers is 150A, a first branch portion 121 has a current specification of 100A, a second branch portion 122 has a current specification of 30A, and a third branch portion 123 has a current specification of 20A, as an example to which the above equation is applied, the above equation may be calculated, and this may be converted into a constant so as to be used. Ten conductive layers may be disposed at the first branch portion 121, three conductive layers may be disposed at the second branch portion 122, and two conductive layers may be disposed at the third branch portion 123.

The divergence type busbar according to the present invention has an advantage in that several conductive layers are divided and diverged, whereby it is possible to accurately divide the current specification, as described above.

Alternatively, the thicknesses of the diverged conductive layers may be changed so as to be different from each other, whereby the thickness of each branch portion 120 may be set based on the current specification of the diverged conductive layers.

Each branch portion 120 of the conductive layer may be formed by folding a portion of the conductive layer at the stem portion 110.

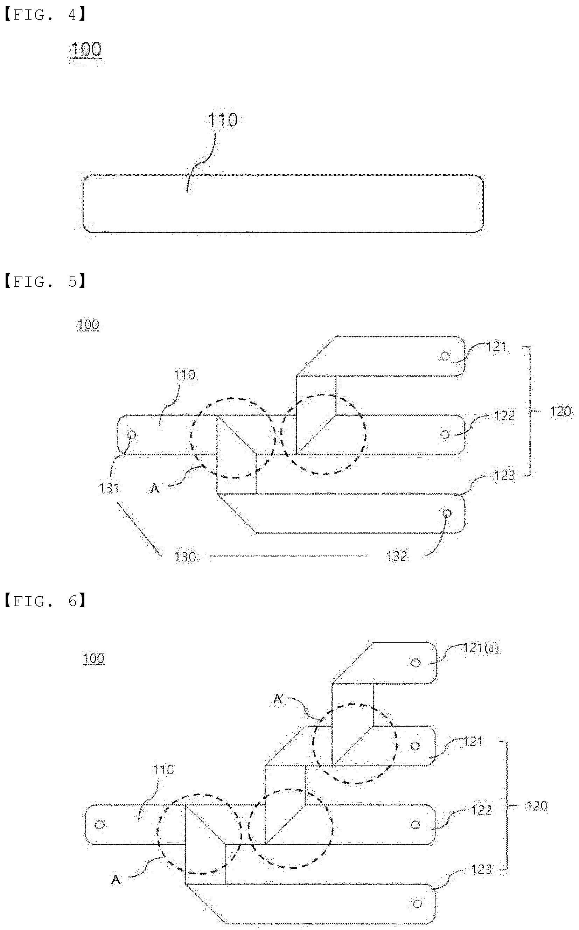

FIGS. 4 to 6 show a process of folding a portion of the conductive layer.

FIG. 4 is a top view of the divergence type busbar according to the present invention before divergence, FIG. 5 is a top view of the divergence type busbar according to the present invention after first divergence, and FIG. 6 is a top view of the divergence type busbar according to the present invention after second divergence.

Before divergence, the divergence type busbar 100 according to the present invention is configured to have a structure in which layers of a conductive layer are stacked such that only the stem portion 110 is present, as shown in FIG. 4.

Although all of the conductive layers may have the same length, the lengths of the conductive layers may be set to be different from each other in consideration of the fact that a portion of the conductive layer constituting the divergence type busbar 100 is folded.

In the divergence type busbar 100 according to the present invention, (S1) at least two conductive layers are stacked, and (S2) one end of each of the stacked conductive layers is welded and a stem portion connection hole 131 is formed.

The conductive layers of the divergence type busbar 100 may be mechanically fastened to each other, or the divergence type busbar 100 may be integrally formed by ultrasonic welding or laser welding.

In the case in which one end of the stem portion 110 is welded, as described above, the conductive layers may be fixed so as not to move when the stacked conductive layers are diverged. Also, in the case in which the stem portion connection hole 131 is formed in one end of the stem portion 110, the stem portion connection hole 131 may be used to fix the divergence type busbar 100 when diverged or to fix the divergence type busbar 100 to a battery module, a battery pack, or another member.

In the divergence type busbar 100, a portion of the stem portion 110 at which the several conductive layers are stacked is folded or divided into several layers to form branch portions 120.

The branch portions 120 may be formed at the same divergence point A, as shown in FIG. 2, or the second branch portion 122 may be formed without divergence and the first branch portion 121 and the third branch portion 123 may be diverged from different divergence points A to form the branch portions 120, as shown in FIG. 5.

At this time, in the divergence type busbar 100, the already diverged branch portion 120, i.e. the first branch portion 121, may be diverged again to form a diverged branch portion 121(a), as shown in FIG. 6. At this time, the first branch portion 121 must be made of at least two layers in order to form the diverged branch portion 121 (a) .

In the divergence type busbar 100 according to the present invention, (S3) some of the conductive layers may be folded to form one or more divergence paths, and (S4) one end of each divergence path may be welded and then a hole may be formed. At this time, the hole may be a branch portion connection hole 132, which is used to connect the busbar to a battery module, a battery pack, or another member.

By welding, a single divergence type busbar 100 may be formed, and the diverged conductive layers of the branch portion 120 of the divergence type busbar 100 may be fixed.

At this time, opposite ends of the divergence type busbar 100 may have the same length. The reason for this is that it is necessary to dispose a device, a battery module, or a battery pack using the divergence type busbar 100 at a constant position. Also, in order to form the divergence type busbar 100 so as to have a constant length, the respective conductive layers of the divergence type busbar 100 may be stacked so as to have different lengths, or (S4-0) a process of cutting the other end of each divergence path so as to satisfy design conditions may be performed after (S3) the process of folding some of the conductive layers of the divergence type busbar 100 to form one or more divergence paths is performed at least once. In the case in which the end of each divergence path is cut, as described above, there is an advantage in that all conductive layers of the divergence type busbar 100 are formed so as to have the same length and are easily diverged.

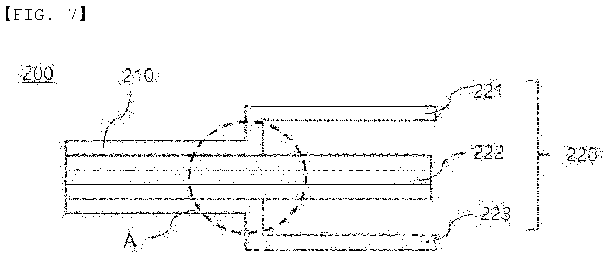

FIG. 7 is a top view of a divergence type busbar according to another embodiment of the present invention.

As can be seen from FIG. 7, the divergence type busbar 200 according to the other embodiment of the present invention may be configured such that the conductive layers are stacked side by side, unlike FIGs. 3 and 2.

At this time, the stem portion 210 may be configured such that a width part of a metal portion made of a conductive metal, which is formed in a stacking direction, has a constant width, whereas a thickness part, which is not formed in the stacking direction, is thin. As a result, it is possible to obtain a busbar having a constant thickness and width.

In the divergence type busbar 200, branch portions 220 may be formed by bending the conductive layers stacked side by side at the stem portion 210 into a predetermined shape.

When the conductive layers of the divergence type busbar 200 are stacked side by side, it is possible to easily form the branch portions 220 of the divergence type busbar 200, and a concern of resistance increase as the result of the conductive layers being folded due to formation of the branch portions 220 may be reduced.

The entirety of the divergence type busbar 200 according to the other embodiment of the present invention may be welded after divergence. The reason for this is that it is necessary to reduce a concern of the divergence type busbar 200 being separated due to stacking side by side.

The divergence type busbar according to the present invention may be included in a battery module or a battery pack. In addition, the divergence type busbar according to the present invention may be used in various devices to connect the devices to each other in parallel.

Those skilled in the art to which the present invention pertains will appreciate that various applications and modifications are possible within the category of the present invention based on the above description.

(Description of Reference Symbols)

1: Busbar for parallel connection
100, 200: Divergence type busbars
10, 110, 210: Stem portions
20, 120, 220: Branch portions
21, 121, 221: First branch portions
121(a): Diverged branch portion
22, 122, 222: Second branch portions
23, 123, 223: Third branch portions
130: Connection hole
131: Stem portion connection hole
132: Branch portion connection hole
A: Divergence point
A': Second divergence point

**Claims**

1. A divergence type busbar, comprising:
   at least two conductive layers stacked, some of the conductive layers being divided and diverged from one another at a divergence point.

2. The divergence type busbar according to claim 1, wherein the divergence point is a parallel connection section at which members electrically connected to each other by the diverged conductive layers are connected to each other so as to have an identical voltage.

3. The divergence type busbar according to claim 2, wherein a number of the conductive layers diverged from one another at the parallel connection section is set based on a current specification of each diverged portion.

4. The divergence type busbar according to claim 3, wherein the number of the diverged conductive layers is calculated by an equation below:

$$\text{Number of conductive layers} = \text{current specification of each diverged conductive layer } / \text{ sum of current specifications of all conductive layers}$$

5. The divergence type busbar according to claim 1, wherein opposite ends of the diverged conductive layers have an identical length.

6. The divergence type busbar according to claim 1, wherein holes are formed in opposite ends of the diverged conductive layers after welding.

7. The divergence type busbar according to claim 1, wherein some of the conductive layers are folded and diverged from one another.

8. The divergence type busbar according to claim 1, wherein each conductive layer is made of a thin and flexible material.

9. The divergence type busbar according to claim 8, wherein each conductive layer is made of copper.

10. A battery module comprising the divergence type busbar according to any one of claims 1 to 9.

11. A battery pack comprising the divergence type busbar according to any one of claims 1 to 9.

12. A method of manufacturing a divergence type busbar, the method comprising:

    (51) stacking at least two conductive layers;
    (S2) welding one end of each of the conductive layers and forming a hole;
    (S3) folding some of the conductive layers to form at least one divergence path; and
    (S4) welding one end of each of the divergence paths and forming a hole.

13. The method according to claim 12, further comprising (S4-0) cutting the other end of each of the divergence paths so as to satisfy design conditions after repeating step (S3) at least once.

【FIG. 1】

1

10

20

21

22

23

【FIG. 2】

100

110

120

121

122

123

131

130 ⎯⎯⎯⎯⎯⎯⎯⎯⎯⎯⎯⎯⎯⎯⎯⎯⎯ 132

A

【FIG. 3】

100

110    120

A

【FIG. 4】

100

110

【FIG. 5】

100

110

121

122          120

123

131

A

130          132

【FIG. 6】

100

121(a)

A'

121

110

122          120

A

123

【FIG. 7】

## INTERNATIONAL SEARCH REPORT

| International application No. |
|---|
| **PCT/KR2021/016877** |

| A. | CLASSIFICATION OF SUBJECT MATTER |
|---|---|

**H01M 50/507**(2021.01)i; **H01M 50/503**(2021.01)i; **H01M 50/526**(2021.01)i; **H01M 50/512**(2021.01)i; **H01M 50/522**(2021.01)i; **H01B 13/00**(2006.01)i; **H01R 43/00**(2006.01)i

According to International Patent Classification (IPC) or to both national classification and IPC

| B. | FIELDS SEARCHED |
|---|---|

Minimum documentation searched (classification system followed by classification symbols)

H01M 50/507(2021.01); H01M 10/0525(2010.01); H01M 2/20(2006.01); H01R 12/08(2006.01); H01R 12/38(2006.01); H01R 13/00(2006.01); H01R 25/16(2006.01); H01R 43/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분기(branch), 버스바(bus bar), 도전층(conductive layer)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 209472042 U (JIANGXI XING YING TECHNOLOGY CO., LTD.) 08 October 2019 (2019-10-08)<br>See paragraphs [0032]-[0038], claims 1 and 2 and figure 1. | 1,2,5-13 |
| Y | | 3,4 |
| Y | KR 20-2000-0010182 U (LG INNOTEK CO., LTD.) 15 June 2000 (2000-06-15)<br>See paragraph [0018] and figure 3. | 3,4 |
| A | CN 207474866 U (ZHEJIANG GUANHUA ELECTRIC CO., LTD.) 08 June 2018 (2018-06-08)<br>See entire document. | 1-13 |
| A | US 2003-0236016 A1 (MURAKAMI, Masakazu et al.) 25 December 2003 (2003-12-25)<br>See entire document. | 1-13 |
| A | JP 2006-339126 A (JST MFG CO., LTD.) 14 December 2006 (2006-12-14)<br>See entire document. | 1-13 |

☐ Further documents are listed in the continuation of Box C.　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 February 2022** | **24 February 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

| International application No. |
|---|
| **PCT/KR2021/016877** |

| Patent document cited in search report | | | Publication date (day/month/year) | Patent family member(s) | | | Publication date (day/month/year) |
|---|---|---|---|---|---|---|---|
| CN | 209472042 | U | 08 October 2019 | None | | | |
| KR | 20-2000-0010182 | U | 15 June 2000 | KR | 20-0212168 | Y1 | 15 February 2001 |
| CN | 207474866 | U | 08 June 2018 | None | | | |
| US | 2003-0236016 | A1 | 25 December 2003 | JP | 2004-095530 | A | 25 March 2004 |
| JP | 2006-339126 | A | 14 December 2006 | None | | | |

Form PCT/ISA/210 (patent family annex) (July 2019)

**EP 4 152 511 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20200168885
- JP 2010207059 A